# EUROPEAN PATENT SPECIFICATION

(11) **EP 1 660 321 B1**
(45) Date of publication and mention of the grant of the patent: **24.12.2008**
(21) Application number: 04775348.8
(22) Date of filing: 27.08.2004
(51) Int. Cl.: B32B 15/18, B32B 15/20, C22C 9/10, C10G 75/00

(54) **COMPOSITE TUBE**
VERBUNDROHR
TUBE COMPOSITE

(30) Priority: 28.08.2003 SE 0302320
(43) Date of publication of application: 31.05.2006
(73) Proprietor: Sandvik Intellectual Property AB, 811 81 Sandviken (SE)
(72) Inventor: HERNBLOM, Johan, S-811 62 Sandviken (SE); GÖRANSSON, Kenneth, S-811 36 Sandviken (SE)
(86) International application number: PCT/SE2004/001242
(87) International publication number: WO 2005/021255

(56) References cited:
- EP-A2- 1 199 129
- WO-A1-03/014263
- GB-A- 2 066 696
- US-A- 5 866 743

## Description

The present invention relates to a composite tube for use at temperatures above 700°C, said tube comprising at least one corrosion resistant member and a load-bearing member. The corrosion resistant member is a Cu-Al based alloy with a minimum thickness of 1 mm. More specifically, the invention relates to a composite tube that is to be used in environments where the risk of metal dusting, coking or carburisation is high. Furthermore, the invention relates to its manufacturing and a method of inhibiting metal dusting in environments where the activity of carbon is 1 or higher.

### BACKGROUND OF THE INVENTION AND PRIOR ART

Developments of the reforming processes in the petrochemical industry during the last years have led to significant process efficiency improvements. New developed catalysts have however been discovered to be sensitive to sulphur poisoning and to quickly become deactivated by water. Therefore, techniques to lower the sulphur and water contents were developed.

However, the low-sulphur and low water conditions led to the discovery of coke-formation and plugging within reactor systems. This effect which later was found to relate back to a severe form of disintegrating attack on metallic construction materials, which affects parts of the equipment such as furnace tubes, piping, reactor walls strongly negative by e.g. shortening the service time of the whole plant. This metal disintegrating mechanism was already known since the 1940's as so-called "metal dusting". The metal dusting process is known to be inhibited by the presence of sulphur in the carbon containing gas. Increased environmental demands and the requirements of newly developed catalysts have made low-sulphur conditions necessary, which has led to an increase in metal dusting related failures.

Metal dusting is a form of catastrophic carburisation, where the metal disintegrates rapidly into coke and pure metal or other types of metal rich reaction products. In this disclosure metal dusting is taken to mean the process whereby a metal or an alloy is attacked by a carbon rich gas and corroded into a mixture of coke/carbon and metal rich particles. Metal dusting typically occurs in gases that are initially supersaturated with respect to carbon, i.e. having a carbon activity greater than unity. The corrosion products of the metal dusting process are metal rich compounds and carbon rich compounds. The carbon rich compounds are typically in the form of coke, i.e. a solid carbonaceous deposit that can contain varying concentrations of e.g. hydrogen, nitrogen, oxygen etc. The metal rich compounds can be different depending on e.g. the oxygen content of the system and the alloy composition, as well as the operating temperature and pressure. Typical metal rich compounds are metal carbides, metallic alloys with dissolved carbon and oxides of the component metals of the alloy.

Metal dusting occurs most commonly when a carbon containing gas is cooled from a high temperature at which it is at or near equilibrium. Often this equilibrium state is reached with the help of catalysts, which means that at the initial equilibrium, the gas phase reaction rates are low. During cooling, the gas will not be able to equilibrate, due to sluggish kinetics, and as a consequence the gas becomes strongly carburising. In most applications where metal dusting is a problem, such as for example in steam reforming applications processes, the gas is cooled in order to retain the equilibrium achieved at high temperature over a catalyst. It is thus a necessary feature of such processes that metal dusting can occur, and it is not possible to design the process so as to avoid metal dusting, carburisation or coking entirely. According to P. Szakalos, "Mechanisms of metal dusting on stainless steel", Licenciate thesis, 2002, ISBN 91-7283-260-6 metal dusting is thus likely to occur in those components where the gas is cooled, such as waste heat boiler, steam superheaters and in heat exchange reformer units. The temperature range in which metal dusting is most likely to occur is 400-800°C.

Even in cases where metal dusting does not occur, catalytic activity of the surfaces of metallic components will cause unwanted compositional changes in the product gas during cooling. Such catalytic activity can be present not only in metallic surfaces, but also in some of the oxides formed on metallic surfaces, such as spinel type (Fe,Ni,Mn,Cr)₃O₄ oxides, as well as in carburised surfaces.

The atomised metal particles produced by metal dusting can be transported with the process gas, accumulate downstream on various reactor parts, and throughout the whole reactor system, metastasise catalytic coking that can create blockage and potentially also damage the catalysts.

It is generally appreciated that metal dusting is a large concern in the production of hydrogen and syngas (H₂/CO mixtures). In these plants, methane and various other higher hydrocarbons are reformed or partially oxidised to produce hydrogen and carbon monoxide in various amounts for use in producing other higher molecular-weight organic compounds. Increased reaction and heat-recovery efficiencies of the processes necessitate operating process equipment at conditions that favour metal dusting.

The need for increased heat recovery in ammonia-synthesis processes has caused metal dusting problems in the heat-recovery section of the reformed-gas system as well as in the reformer itself. Metal dusting is also a problem in direct iron-ore reduction plants wherein reformed methane is dried and reheated to enhance ore-reduction efficiencies. Metal dusting occurs in the reformer, reformed-gas reheater and piping up-stream of the ore-reduction. Petroleum refineries experience metal dusting in processes involving hydro-dealkylation and catalyst regeneration systems of "plat-former" units.

Other processes wherein metal dusting occurs are nuclear plants that employ carbon dioxide for cooling the equipment, in the recycle-gas loop of coal-gasification units, in fired heaters handling hydrocarbons at elevated temperatures, iron-making blast furnaces in steel mills, and fuel cells using molten salts and hydrocarbons.

In recent years, there has been a strong emphasis on reforming and synthesis technology developments to make possible commercialisation of remotely located, so-called "stranded gas reserves". The synthesis step, based on further developments of the Fischer-Tropsch process, will require the use of highly severe metal dusting causing compositions of the synthesis gas, with lower steam to carbon ratios and higher CO/CO₂ ratios, which will cause severe metal dusting. However, only small steps in the development in this direction have been taken due to lack of material with sufficient resistance to metal dusting.

The solution that is presently used in order to provide protection to metal dusting and reduce the formation of coke the utilisation of advanced nickel-, cobalt- or iron-base alloys with high contents of chromium and certain additions of aluminium. Several methods of surface modification, which are based on diffusion coating techniques or coatings by overlay welding, laser fusion, chemical vapour deposition (CVD), physical vapour deposition (PVD) or sputtering have been tested. Many of those methods include elements based on transition metals, such as iron, nickel and cobalt, which however are known for their catalytic properties with respect to promotion of coke formation.

There are metals, such as Cu and Sn, which are known to be resistant or immune to carburization and coke formation, and which lack catalytic activity to carbon-containing gases. Sn has a too low melting point to be useful above 300°C. Cu is a soft metal at operating temperatures above 400°C which makes it affected by considerable erosion if exposed to high gas velocities or gases containing solid particles and/or droplets/aerosols of liquids. When metals such as copper and tin, which have high vapour pressures at temperatures over 500°C, are present on the surface of the metal they may be vaporised and transported into the process system, leading to contamination of for example construction material, process fluids and catalysts; as well as loss of thickness of the protective material.

There are techniques existing to coat construction material with thin layers of resistant or immune metals or coking-resistant metals such as Sn, Cu and are described in US-A-5,863,418 and EP-A-0903424 and WO 03014263 A1. Such thin layers, approximately <200µm thick, will be consumed by metal loss due to erosion and evaporation, as well as by reaction with the construction substrate material, resulting in inadequate service lives at temperatures above approximately 500°C. Periodically re-coating of the surfaces exposed to corrosive gases requires either dismantling the process equipment and cleaning the surfaces to be coated and finally coating them or cleaning and re-coating them within the process equipment. The first method requires long shut-down periods, the second expensive re-designing and the development as of today non-existing methods for in-situ cleaning and coating as well as for checking the integrity of the produced films. Therefore, periodic re-coating of thin coats will not be technologically and commercially practicable.

The alternative method, to construct solid Cu-base members, referred to in "THE ALUMINIUM BRONZES", MACKEN, PJ, SMITH, AA, COPPER DEVELOPMENT ASSN., 55 SOUTH ARDLEY STREET, LONDON W. 1, SECOND PUBLICATION 1966, CDA PUB. NO. 31, 263 PP ; 1966 is not an option above approximately 500°C for pressurised components or components that in some other way have to maintain structural integrity during their entire service life, due to the low mechanical strength of copper alloys above 400-500°C.

The use of such short lived solutions will therefore not remove the presently prevailing sense of uncertainty around operational concepts as predictability of maintenance costs and secondary damage risks related to outbreak of metal dusting attacks on process equipment or of increasing catalytic activity of construction materials with time. Particularly such solutions which feature thin coatings on load-carrying components or construction materials suffer from being short lived, and differ substantially from the present solution in this specific respect.

It is therefore a primary object of the invention to provide a product that is resistant to metal dusting, carburisation and coking, especially in environments wherein the activity of carbon is close to unity or higher.

A second object of the invention is to provide a product in that is able to withstand mechanical loads both at low and at high temperatures, such as up to at least 1000 °C; as well as is resistant to material loss as a result of erosion and abrasion due to for example high gas velocities and suspended particles within the process gas stream.

A further object of the invention is to provide a product with a predicable long service lifetime in a defined environment, during which it will remain resistant to metal dusting.

Furthermore, it is an object of the invention to provide a product, which is cost effective.

It is another object of the invention to provide a product that has one or more surfaces that do not catalytically activate the formation of solid coke or catalytically change gas phase reaction directions or equilibria in a carbon-rich environment.

Yet another object of the invention is to manufacture such a product.

### SUMMARY OF THE INVENTION

It has now been discovered that a tubular composite member consisting of at least one layer of a corrosion resistant member and one layer of a load-bearing member can fulfil the above stated requirements.

The corrosion resistant member is made of a Cu based alloy comprising Al. It has a wall thickness of at least 1 mm. The load-bearing member is an alloy based on Fe, Ni or Co, having a minimum wall thickness of at least 1 mm, preferably at least 2.5 mm.

The corrosion resistant member can be located on the inside of the load-bearing member, as well as on the outside. According to one embodiment of the invention, a corrosion resistant member is located on the inside of the load-bearing member and another corrosion resistant member is located on the outside.

### BRIEF DESCRIPTION OF THE FIGURES

- Fig. 1: shows the theoretical diffusion profile for Cu and Al after 4 years exposure at 750°C of a Cu-8%Al film with an initial thickness of 200µm.
- Fig. 2: shows diagrammatically the weight loss of some comparative samples and one example of the present invention after exposure at 650°C over a period of time of 1000 hours (4 cycles to RT) in 25CO+3H₂O+H₂.
- Fig. 3: shows the oxidation weight change during exposure to air at 850°C for seven different corrosion resistant Cu-Al base alloys.
- Fig. 4: shows the partial pressure of CO molecules with different isotope composition in a furnace kept at 650°C containing a piece of alloy Q.
- Fig. 5: shows the partial pressure of CO molecules with different isotope composition in an empty furnace kept at 650°C.
- Fig. 6: shows a section in a phase diagram Cu-Ni-Al calculated with Thermo-calc for a given Al-content of 8 weight-%, where 1 - liquid, 2 - AlNi, 3 - FCC, 4 - BCC.
- Fig. 7: shows the solubility of carbon (g carbon/g alloy) in an alloy with 4 weight-% Al and a varying Cu-Ni-relation at 750°C.

### DETAILED DESCRIPTION OF THE INVENTION

A composite tube according to the invention is composed of at least two different members with different compositions, as described in the following. The different members have to fulfil different requirements: the first is a load-bearing member, which provides the mechanical stability necessary for the temperature and pressure as required by the process. The surfaces exposed to metal dusting, carburising and coking environments are covered with sufficiently thick layers of the corrosion resistant member.

### Corrosion resistant member

The surfaces of the product that may be exposed to carburisation, metal dusting and coking should be covered with a corrosion resistant member. This could be on the inside, on the outside or both on the inside and outside of the load-bearing member.

The corrosion resistant member can be either mechanically or metallurically bonded to the load-bearing member. However, according to one preferred embodiment of the invention the corrosion resistant member is at least partially metallurgically bonded to the load-bearing member, for example to a degree of 60-100 % of the contact surface, preferably to a degree of 75-100%. A metallurgical bond gives structural integrity to the entire product and a good heat conducting ability across the wall of the product.

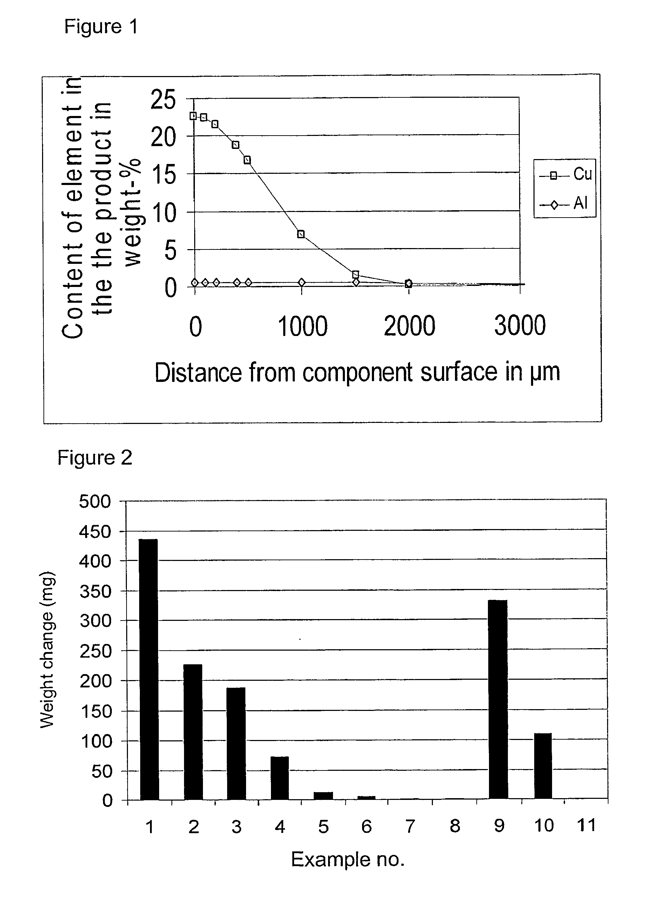

The thickness of the corrosion resistant member is at least 1 mm. However, the necessary thickness is determined by the loss of material as a result of evaporation, oxidation, and erosion, as well as by diffusion into the load bearing component and the diffusion of element from the load-bearing component into the corrosion resistant alloy. The diffusion process, which is illustrated in Fig. 1 leads to a successive deterioration of the corrosion resisting properties of the product if the thickness of the corrosion resistant alloy is too low, and an increase in the catalytic activity of the surface due to the diffusion of elements such as Fe, Ni, Mn from the load carrying member into the corrosion resisting alloy.

Normally, the thickness of the corrosion resistant member do not need to be more than 5 mm. Preferably, the thickness is 2 mm or less.

The corrosion resistant member is formed by a Cu-Al base alloy with the following composition (in weight-%): Al: 4-13 weight-%, preferably 6-8-weight %. The alloy may contain additional elements in order to optimise oxidation resistance or fabricability: Si: >0-6 weight-%, preferably 0,05-5%, more preferably 0,5-3%, most preferably 0,5-2%. Sum of Fe, Ni, Co, Mn: 0-20 weight-%. For optimum resistance to metal dusting, the sum of Fe+Ni+Co+Mn should be less than 6.0 weight-% and the amount of any individual element should be less than 4.0 weight-%. Most preferably, the sum of Fe+Ni+Co+Mn should be less than 1.0 weight-%.

The effect of the alloying elements will now be described more in detail:

### Aluminium

Aluminium is a necessary component in the alloy because of its capacity to form a protective alumina layer on the surface of the alloy in the temperature range of 300°C to 1300°C even in environments that solely contain trace amounts of oxygen. Aluminium can be added in amounts up to approximately 9 weight-% without causing any major deterioration of the mechanical properties. It is estimated that this level is sufficient to achieve a necessary corrosion resistance in the majority of considered applications. If necessary, higher Al levels may be used, but in those cases, the ability of the alloy to be cold formed is limited. However, such levels may be used for example in hot-extruded sections such as circular tubes or in hot-rolled bar or plate. Aluminium can be added in an amount of up to 13 weight-%, preferably up to 9 weight-%.

### Silicon

Silicon can be used in order to promote the protective effect of aluminium in this type of alloy by forming aluminosilicates, which have higher formation rates compared to that of pure alumina. In this type of alloy the lower starting temperature for the formation of a protective oxide is favourable. Therefore silicon can be added to the alloy in order to improve the oxide formation at low temperatures, especially if the content of Al is below approximately 8%.

However, silicon has the effect of markedly decreasing the melting point of the alloy. The practical maximum in silicon content is 6%. Therefore, the content of silicon in the alloy is >0-6%, preferably 0,05-5%, more preferably 0,5-3%, most preferably 0,5-2%.

### Nickel, iron, cobalt, manganese

Transition metals, especially iron, nickel and cobalt are known to have a strong catalytic effect on the formation of coke. The protecting capacity of the alumina layer, which will be formed on the surface of the alloy, allows proportionately high levels of these elements, but not more than a total of 20 weight-% of iron, nickel and cobalt. Nickel, and, to a minor degree cobalt, can be used in order to increase the maximum temperature of use by increasing the melting point of the alloy up to approximately 1100°C and consequently allow the use of production methods that involve steps through temperatures above the melting point of a binary Cu-Al alloy, which is approximately 1030-1080°C and improve the mechanical strength of the alloy at increased temperatures, from approximately 800°C to approximately 1100°C.

An increased content of nickel, cobalt, iron and/or manganese can lead to an improved tendency of carburization and to a decreased resistance to metal dusting and coking. Therefore, the content of these elements should be kept as low as possible while still allowing the use of effective production methods. A practical maximum above which the deterioration of the corrosion resistance is expected to be prohibitive is 20 weight-%. The nickel in the alloy can completely or partly be replaced by iron and/or cobalt.

A pure Cu-Al-alloy according to the present invention has a melting point between 1030° and 1080°C, dependent on the content of Al.
If an optimum resistance to metal dusting and coking is desired, the content of each of the elements in the group Fe, Mn, Ni, Co should be less than 4.0 weight-% per element. The total content of these elements should in that case not exceed 6.0 weight-%, preferably not exceed 1.0 weight-%.

Iron can be used to improve the hot working characteristics of Cu-Al alloys, and it can therefore be added in amounts of up to 10 weight-%, preferably up to 5 weight-%, most preferably 0.5-4 weight-%.

### Reactive Additions

In order to further increase the oxidation resistance at higher temperatures, it is common practice to add a certain amount of reactive elements, such as Rare Earth Metals (REM), e.g. yttrium, hafnium, zirconium, lanthanum and/or cerium. One or more of this group of elements should be added in an amount not exceeding 1.0 weight-% per element. The total content of those elements should not exceed 3.0 weight-%, preferably not exceed 0.5 weight-%, most preferably 0.01-0.2 weight-%.

### Copper

The main component, which constitutes the balance of the alloy of the present invention, is copper. Copper is known to be resistant or immune to catalytic activity and coking. Until today it has not been possible to use pure copper in these applications, due to its high oxidation rate when in contact with oxygen. The alloy comprises up to 98 weight-% Cu, but at least 60 weight-% Cu, preferably at least 74 weight-%, most preferably at least 80 weight-% Cu.

Further, the alloy comprises normally occurring alloying additions and impurities. Also, the alloy comprises normally occurring alloying additions and impurities. These are defined as follows:

### Alloying additions

Elements added for process metallurgical reasons, in order to obtain melt purification from e.g. S or O or added in order to improve the workability of the cast material. Examples of such elements are B, Ca, Mg. In order for such elements not to have a harmful effect on the properties of the alloy, the levels of each individual element should be less than 0.1 %. In addition, several of the elements previously mentioned, e.g. Al, Si, Ce, Fe and Mn can also be added for process metallurgical or hot workability reasons. The allowable concentrations of these elements are as defined in the previous sections.

### Impurities

Impurities refer to unwanted additions of elements from contaminants in the scrap metal used for melting or contamination from process equipment. Examples of such elements are: Sn, Pb, As, P. The maximum content of such elements is 0.1 % for Sn, As, P as well as for other not mentioned elements. The maximum content of Pb is 0.5%. The total amount of such elements should not exceed 0.5%.

### Load-bearing member

The load-bearing member consists of an iron base, nickel base or cobalt base alloy with proven high temperature strength, since it is required that the alloy used should have a sufficiently high mechanical strength at the operating conditions of the product. Examples of factors that influence the operating condition are temperature, pressure drop across the wall of the component, and total load of the product defined as the sum of the load from the weight of the load-bearing member and of the corrosion-resistant member. Furthermore, it is further required that the alloy, in its as-delivered condition, fulfils relevant legal and standardisation requirements, e.g. pressure vessel approvals. Also, if all surfaces of the load-bearing member are not covered with a corrosion resistant alloy, it is required that the alloy itself has sufficient corrosion resistance to the environment which it is exposed to.

Examples of load-bearing materials are:
- 18-25% Cr, 25-40% Ni, balance Fe and normally occurring additions like Al, C, N, Ti, Nb, Mo etc.
- 16-35% Cr, 50-75% Ni, , balance Fe and normally occurring additions like Al, C, N, Ti, Nb, Mo etc.
- 7-13% Cr, 0-0.2% C, 0-0.2 % N (min 0.05% C+N) balance Fe and additions of Nb, Ti, V, Mo and/or W etc.
- 16-22% Cr, 8-20% Ni, balance Fe and additions of for example Mn, Nb, C

The thickness of the load-bearing member is suitably adjusted to the conditions in which the product will operate and to the selected composition. Suitable thicknesses are ranging from 1 mm to 15 mm. However, tubes with even thicker walls can be used if so required. Preferably the wall thickness of the tube is within the range 1-10 mm, most preferably 2.5-5 mm.

The load-bearing member can be both in the form of seamless and welded tube. It can be manufactured with the aid of all conventional processes known resulting in a tube, for example extrusion, rolling, centrifugal casting, welding or the like.

### Manufacturing process of the final product

The product according to the present invention can be machined or manufactured by conventional metal working or metal forming processes, to a composite construction material in the shape of tubes or pipes. It can also be produced by deposition of the corrosion resistant alloy onto the surface or some or all of the surfaces of a semi-finished tubular product of the load bearing alloy using known deposition techniques. Some examples of manufacturing process are co-extrusion, overlay welding, co-drawing or shrinkage of one tube on the load-bearing component and one outer and/or inner tube of the alloy.

However, one preferred method of manufacturing is providing a tubular member of a load-bearing material and depositing at least one corrosion resistant member by for example overlay welding in a thickness of at least 0.5 mm.

The final product has usually an outer diameter of 10-400 mm, preferably 35-200 mm. However, both smaller and bigger tubes may use this composite technique as well. The total wall thickness of the composite tube is 1.5-20 mm, preferably 3-10 mm.

### DESCRIPTION OF PREFERRED EMBODIEMENTS OF THE INVENTION

The invention according to the present disclosure will now be described more in detail with the aid of some examples. These examples are not to be seen as limiting the invention, but merely of illustrative nature.

Examples1-5 are related to the corrosion resisting properties of the Cu-base alloy, in particular its resistance to metal dusting, carburisation and coke formation and its ability to form a protective oxide with an excellent self-healing ability and the choice of composition of such an alloy.

Examples 6-11 are related to the detailed design of a finished product fulfilling certain requirements in terms of mechanical properties as well as corrosion resistance and the environment in which is to be used.

### EXAMPLE 1

Static laboratory experiments were executed in a tube furnace in a strongly coking atmosphere. The metal dusting resistance of stainless steel of standard quality and the Cu-base alloys A to M of the present invention was measured and evaluated. Table 1 shows the chemical compositions of the investigated materials, Table 2 shows the compositions of the embodiments A to Q according to the present invention. All contents are given in weight-%.

**Table 1**

| Example no. | C | Cr | Ni | Mo | N | Si | Mn | P | S | Ti | Ce |
|---|---|---|---|---|---|---|---|---|---|---|---|
| 304L (bar) | 0,013 | 18,35 | 10,15 | 0,39 | 0,043 | 0,42 | 1,26 | 0,024 | 0,004 | | |
| 304L (plate) | 0,015 | 18,20 | 10,10 | 0,39 | 0,043 | 0,43 | 1,42 | 0,021 | 0,001 | - | - |
| Alloy 800HT | 0,063 | 20,37 | 30,10 | 0,05 | 0,009 | 0,73 | 0,53 | 0,009 | 0,001 | 0,5 | - |
| 353MA | 0,052 | 25,10 | 34,10 | 0,20 | 0,175 | 1,56 | 1,40 | 0,020 | 0,001 | - | 0,06 |

**Table 2**

| | Al | Ni | Fe | Si | Mn | Cr | Co | Ce | Zr | La | Cu |
|---|---|---|---|---|---|---|---|---|---|---|---|
| A | 8,0 | 0,02 | 0,02 | | 0,005 | 0,002 | | | 0,0001 | | balance |
| B | 5,6 | <0,1 | <0,1 | 1,7 | <0,1 | <0,1 | <0,1 | | | 0,0014 | balance |
| C | 9,5 | <0,1 | <0,1 | 4,8 | <0,1 | <0,1 | <0,1 | | | 0,0012 | balance |
| D | 8,4 | <0,1 | <0,1 | <0,1 | <0,1 | <0,1 | <0,1 | | | 0,0004 | balance |
| E | 6,3 | <0,1 | <0,1 | 0,6 | 6,3 | <0,1 | <0,1 | | | 0,0007 | balance |
| F | 15,1 | 10,1 | <0,1 | <0,1 | <0,1 | <0,1 | <0,1 | | | 0,0004 | balance |
| G | 2,8 | <0,1 | <0,1 | 0,1 | <0,1 | <0,1 | <0,1 | | | 0,016 | balance |
| H | 6 | | | 2 | | | | | | | balance |
| I | 8 | | | 2 | 8 | | | | | | balance |
| J | 10.7 | 7.0 | | <0,1 | 6.6 | | | | | 0.0018 | balance |
| K | 15 | 15 | | | | | | | | | balance |
| L | 12.2 | <0,1 | <0,1 | <0,1 | <0,1 | <0,1 | <0,1 | | | 0.075 | balance |
| M | 4.9 | <0,1 | <0,1 | <0,1 | <0,1 | <0,1 | <0,1 | 0.068 | | 0.055 | balance |
| N | 9,6 | | | | | | 5.0 | | | | balance |
| O | 13.7 | | | | | | 9.8 | | | | balance |
| P | 10.5 | <0,5 | 3,5 | <0,1 | <0,1 | <0,1 | <0,1 | | | | balance |
| Q | 8.1 | <0,1 | <0,1 | 2,1 | <0,1 | <0,1 | <0,1 | | | | balance |

The test samples were cut from plates or bars into a rectangular shape with dimensions of approximately 10 x 12 x 3 mm and prepared by grinding with 600 mesh. Some of the test samples were surface treated by a standard pickling operation in 1.8M HNO₃ + 1.6M HF at 50°C during 8-40 min. or treated by an electro polishing operation (50g CrO₃ +450ml ortophosphoric acid, 20V). The samples were cleaned in acetone prior to testing and placed in the cold furnace. In order to reach a low oxygen partial pressure, pure hydrogen was flushed through the furnace for three hours before introducing the reaction gas and heating to temperature. The gas flow rate was 250 ml/min, which corresponds to a gas velocity over the specimen of 9 mm/s. The temperature was stabilised at 650°C after 20 minutes heating. The input composition of the reaction gas was 25%CO+3%H₂O +72%H₂. The laboratory exposure was conducted at 650°C/1000h in a quartz tube furnace with a diameter of 25mm. Four temperature cycles down to 100-200°C and back to 650°C, each with a duration time of about 4-5h, were conducted in order to raise the carbon activity and promote initiation of metal dusting.

The results are presented as weight loss measurements after cleaning the samples from coke and graphite as presented in Figure 2, where:

**Table 3**

| Comparative Example no. | Alloy | Product condition | Surface modification |
|---|---|---|---|
| 1 | 304L | bar | Annealed |
| 2 | 304L | bar | electro-polished |
| 3 | 304L | bar | Ground |
| 4 | 304L | bar | Pickled |
| 5 | 304L | plate | Annealed |
| 6 | 304L | cold rolled plate | Ground |
| 7 | 304L | cold rolled plate | electro-polished |
| 8 | 800 HT | plate | Ground |
| 9 | 800 HT | plate | Pickled |
| 10 | 353 MA | plate | overpickled |
| 11 | Alloy A | plate | untreated |

As shown in Figure 1, all comparative steels (Examples 1-10) suffered from metal dusting with formation of pits and coke during the 1000 h exposure as function of the measurable weight gain. However, the alloy of the present invention (Example 11) was practically non-reactive in this atmosphere with no weight change or coke formation. Example 11 has been exposed for totally 4000/hours in similar atmospheres (4x1000h at 650°C) with any measurable or visible changes.

### EXAMPLE 2

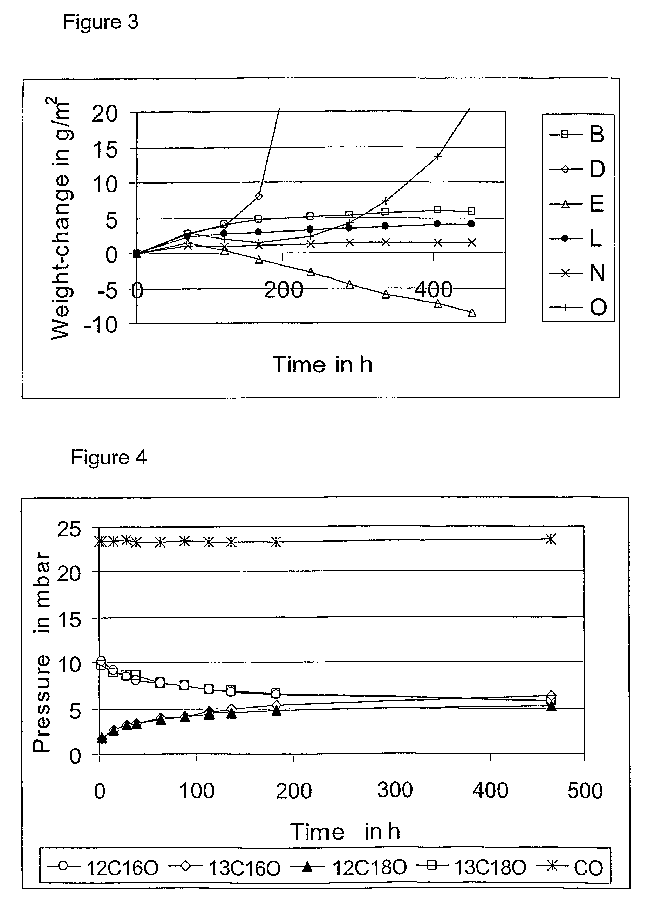

The alloys according to the examples B to O with compositions according to Table 2 were produced by melting in a protective gas atmosphere of argon, followed by casting. These alloys can, when exposed to oxidising atmosphere in the temperature range of 300° to 1050°C, form a protective alumina or mixed aluminium containing oxide, which restrains further oxidation of the alloy and restrains evaporation of copper from the alloy, which makes the alloy more resistant to material loss by copper evaporation. This is illustrated in Table 4 which shows the average weight change per hour (g/(m²h)) after cyclic oxidation in air during between 48h and 454h for 7 different Cu base alloys and which makes visible that there is little difference between the different alloys at 400°C and 550°C. Alloy D is clearly inferior to the other alloys at higher temperatures with respect to oxidation. The oxide formed on alloy E is prone to spalling during cooling from 850°C. The superior oxidation resistance at 850°C of alloys B, L and N at 850°C is illustrated in Figure 3. The results indicate that optimum oxidation resistance is achieved in alloys containing at least 9 weight-% Al or a combination of Al and Si such that Al+2*Si (in weight-%) is greater than or equal to 9. In the latter case alloy B shows that a Si-content of 1.7 weight-% is sufficient to give adequate oxidation resistance to an alloy with 5.6 weight-% Al. A Co-content of 5 weight-% does not result in any deterioration of the oxidation resistance, but with a Co-content of 10 weight-% a minor deterioration of the oxidation resistance is evident. Likewise, 6.3 weight-% Mn causes the alloy to become sensitive to oxide spalling. It can be expected that iron and nickel have similar effects as manganese and cobalt with respect to the oxidation resistance. It can thus be concluded that for optimum oxidation resistance an alloy composition of 5-12 weight-%Al, 1-3 weight-%Si and less than 6 weight-% of Fe+Mn+Ni+Co is desirable.

**Table 4**

| | B | D | E | L | N | O | P |
|---|---|---|---|---|---|---|---|
| 400°C | 0,0024 | 0,0015 | 0,0049 | 0,0024 | 0,0048 | 0,0023 | 0,0016 |
| 550°C | 0,0022 | 0,0013 | 0,0031 | 0,00095 | 0,0015 | 0,00094 | 0,0041 |
| 700°C | 0,014 | 0,052 | 0,010 | 0,0073 | 0,015 | 0,017 | 0,012 |
| 850°C | 0,030 | 0,58 | -0,038 | 0,022 | 0,0048 | 0,062 | 0,054 |

### EXAMPLE 3

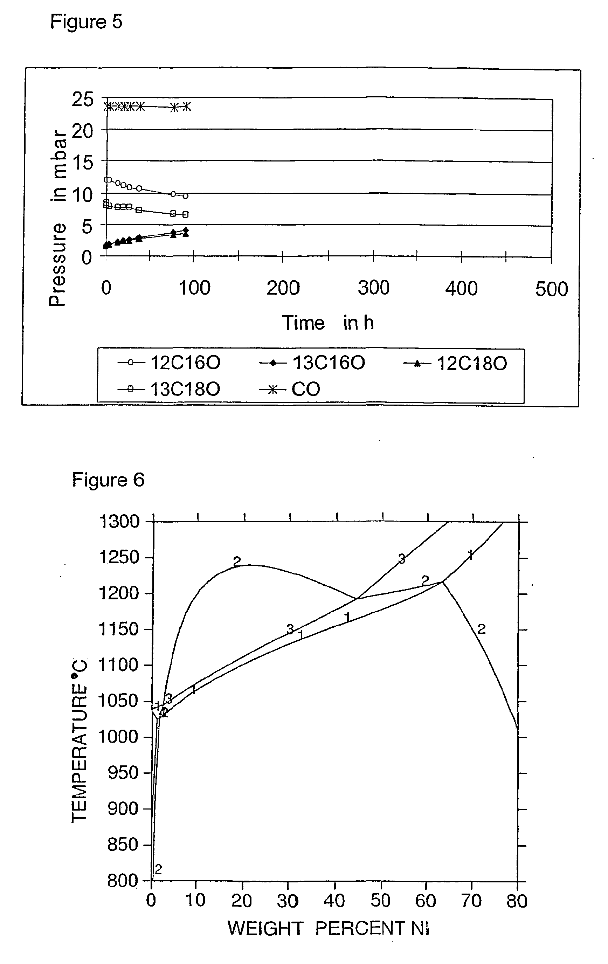

The alloy according to example Q with composition according to Table 2 was produced by melting in a protective gas atmosphere of argon, followed by casting. The alloy was exposed to 23 mbar CO-gas at 600°C for 465h. The CO-gas was initially composed of a mixture of CO-molecules composed of ¹³C and ¹⁸O isotopes and CO molecules composed of ¹²C and ¹⁶O isotopes, By measuring the rate of transformation of ¹³C¹⁸O and ¹²C¹⁶O to ¹³C¹⁶O and ¹²C¹⁸O the catalytic activity of alloy Q with respect to breakdown and recombination of CO can be determined. The breakdown reaction is considered to be important as a first step in any metal dusting, carburisation or coking process.
The transformation of ¹³C¹⁸O and ¹²C¹⁶O in the presence of alloy Q is shown in Figure 4 measured by mass spectrometry. As a comparison, Figure 5 shows the transformation of the same gases in an empty furnace. The furnace material is silica. There is no significant difference in the catalytic activity between Alloy Q and the empty silica furnace. The latter in turn can be considered as an inert material, i.e. alloy Q completely lacks any catalytic activity with respect to CO, and can thus be considered as a highly resistant or immune material with respect to metal dusting, carburisation and coking in CO containing gases.

### EXAMPLE 4

A laboratory exposure was performed in a tube furnace in a highly carburizing atmosphere. The relative tendency to coke formation at 1000°C was evaluated between a standard grade stainless steel and several Cu-base alloys with compositions according to tables 1 and 2.

The test samples were cut from cast material into rectangular shape with dimensions of approximately 10x15x 3 mm and prepared by grinding to 600 mesh. The samples were cleaned in acetone prior to testing and placed in the cold furnace. To reach a low oxygen partial pressure, pure hydrogen was flushed through the furnace for three hours before introducing the reaction gas and heating to temperature. The gas flow rate was 250 ml/min, which corresponds to a gas velocity over the specimen of 9 mm/s. The temperature stabilises at 1000°C after 30 minutes heating. The reaction gas had an input composition of 83%CO+17%H_{2.} The laboratory exposure was conducted at 1000°C/100h in a quartz tube furnace with a diameter of 25mm.
The results from the coking tests are presented in Table 5 as weight gain due to coke/graphite formation on the sample surface.

**Table 5**

| Material | Coke formation at 1000°C |
|---|---|
| | [mg/cm²/100h] |
| Alloy 800HT | 5.2 |
| P | 1.0 |
| Q | 0 |
| L | 0 |
| N | 0.5 |

It is evident that even relatively small amounts of Co, Ni and Fe are detrimental to the coking resistance of the Cu base alloy. Therefore, it is clear that the total amount of Fe+Ni+Co+Mn should be below 3 weight-% in order to obtain optimum properties. However, even with a total content of Fe+Ni+Co+Mn of up to 6 weight-%, the alloy is superior to the standard material Alloy 800HT.

### EXAMPLE 5

Fig. 6 shows a section of a phase diagram Cu-Ni-Al calculated with Thermo-calc for a given Al-content of 8 weight-%. Graph 1 shows the solidus/liquidus temperature, graph 2 shows the area of stability for the phase NiAl, graph 3 shows the area of stability for the cubic close-packed solid solution of copper and nickel, which also can contain minor contents of e.g. aluminium. Graph 4 shows the area of stability for the phase, which in the pure Cu-Al-system is called β.

Fig. 6 and Table 6 show the effect of different contents of copper, nickel and aluminium in an alloy of 92 weight-% (Cu+Ni) and 8 weight-% Al at the solidus- and liquidus temperatures. The Figure 6 shows that only by increasing the content of nickel above 20 weight-% its melting point can be brought to exceed 1100°C.

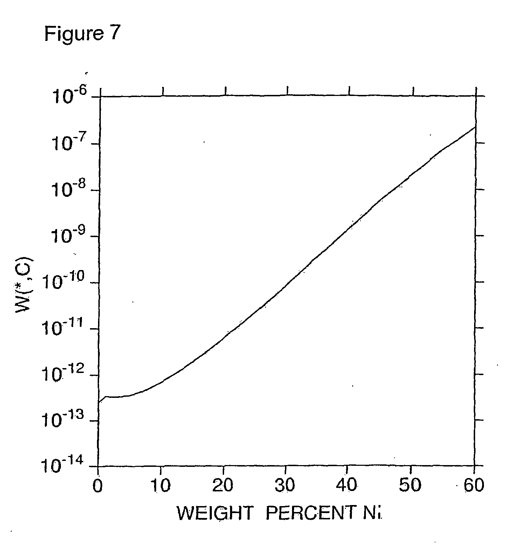

Fig. 7 and Table 6 show the effect of the Ni, Cu and Al contents on the solidus temperature and carbon solubility in an Cu-Al-Ni alloy. The diagram shows, that for nickel contents above approximately 10 weight-% the solubility of carbon is strongly increased with increasing nickel content. The rate of carburization of an alloy is to a high extent determined by the solubility of carbon in the alloy and also the phenomena of metal dusting and coking are expected to increase with increasing carbon solubility. Therefore, it is desirable that the solubility of carbon in the alloy is as low as possible, and a consequence of this is that the nickel content should be lower than 10 weight-% in order to obtain an optimum resistance to carburization, coking and metal dusting, preferably lower than 1 weight-%.

The reason for such low level of the Ni-content is required in order to obtain optimum properties is, that nickel, besides affecting the solubility of carbon also catalyses coking, which is unfavourable.

**Table 6**

| Example | Ni | Al | Cu | Solidus | Carbon solubility at |
|---|---|---|---|---|---|
| | weight-% | weight-% | weight-% | temperature | 750°C |
| | | | | °C | g carbon/g alloy |
| R | 0 | 4 | 96 | 1070 | 2,50E-13 |
| S | 2 | 4 | 92 | 1080 | 3,30E-13 |
| T | 5 | 4 | 91 | 1090 | 3,50E-13 |
| U | 10 | 4 | 86 | 1100 | 6,60E-13 |
| V | 20 | 4 | 76 | 1130 | 5,00E-12 |
| W | 0 | 8 | 92 | 1040 | 9,65E-13 |
| X | 2 | 8 | 90 | 1030 | 8,22E-13 |
| Y | 5 | 8 | 87 | 1040 | 5,40E-13 |
| Z | 10 | 8 | 82 | 1070 | 3,00E-13 |
| AA | 20 | 8 | 72 | 1100 | 8.00E-13 |
| Comp. | 60 | 4 | 36 | 1270 | 1,90E-07 |
| Example 1 | | | | | |
| Comp. | 60 | 8 | 32 | 1200 | 7,00E-08 |
| Example 2 | | | | | |
| Comp. | 30 | 4 | 66 | 1160 | 7,00E-11 |
| Example 3 | | | | | |
| Comp. | 40 | 4 | 56 | 1190 | 1,20E-09 |
| Example 4 | | | | | |
| Comp. | 50 | 4 | 46 | 1230 | 1,90E-08 |
| Example 5 | | | | | |
| Comp. | 30 | 8 | 62 | 1130 | 7,00E-12 |
| Example 6 | | | | | |
| Comp. | 40 | 8 | 52 | 1150 | 1,00E-10 |
| Example 7 | | | | | |
| Comp. | 50 | 8 | 42 | 1180 | 2,40E-09 |
| Example 8 | | | | | |

### EXAMPLE 6

The product is in the shape of tubes or pipes, where the load-carrying layer is coated at one or both surfaces with the Cu base alloy specified in previous examples. Some of the methods, which can be used in order to produce a composite solution of the alloy and a load carrier are co-extrusion, overlay welding or co-drawing and shrinkage of one tube on the load carrying component and one outer and/or inner tube of the alloy according to the invention, possibly followed by a heat treatment in order to obtain a metallurgical bonding between the components. Composite tubes can also be produced by explosion welding of two or more tubes of a load carrier and the Cu base alloy according to the invention. An outer- and/or inner component can also be applied on a load carrier by help of a powder metallurgical technique, such as HIP (Hot Isosatic Pressing) or CIP (Cold Isostatic Pressing). After pressing, the formed composite will be further machined by e.g. hot extrusion and/or welding, drawing and forging.

Other methods for the production of composite tubes are electrolytic coating of copper and aluminium on the load carrying component, possibly followed by an annealing in order to homogenise the coating or a gas phase deposition of copper and aluminium by e.g. vaporisation, pack cementation, sputtering, chemical vapour deposition (CVD) or other methods. Aluminium and copper can also be deposited on the load carrier e.g. by dipping in a melt or by overlay welding. These methods are possible to use in order to produce coats on both inner and outer tube surfaces. Separate coating methods can be used in order to supply copper and aluminium to the alloy. In such cases, a final heat-treatment is required in order to homogenise the alloy with the purpose to keep its corrosion properties.

Composite strip or composite plates of Cu base alloy and a load carrying alloy, can be welded together to longitudinal welded or helical welded composite tubes with the Cu base alloy on the inner and/or outside of the tube.

Suitable load carriers in the above mentioned product forms are such high temperature alloys, which today are used for their mechanical strength and oxidation resistance in the actual temperature range, but which have insufficient metal dusting, carburisation, or coking resistance for use in the environments to which the present invention relates. This includes for temperatures lower than 700°C martensitic or bainitic or ferritic iron alloys with additions of e.g. chromium, molybdenum, vanadium, niobium, tungsten, carbon and/or nitrogen in order to obtain mechanical strength at high temperature. At temperatures above approximately 500°C it is in many cases common practice to use austenitic iron-chromium-nickel alloys, which are possibly mechanically strengthened as load carrier by alloying with e.g. molybdenum, vanadium, niobium, tungsten, carbon and/or nitrogen. In both of those groups of alloys chromium and sometimes aluminium and/or silicon is used in order to give the load carrier an improved corrosion resistance. In those cases, where the product according to the invention is composed of such a load carrier covered on both surfaces with the corrosion resistant Cu base alloy of, the Cu base alloy according to the invention will deliver the corrosion resistance that is required. By that means, alloys whose maximum temperature of use in other applications is limited by the corrosion resistance are being able to be used as load carriers at higher temperatures than otherwise. In those cases, where product according to the invention is only covered at one surface of the load carrier by the corrosion resistant Cu base alloy, it is necessary that the load carrier itself has a sufficient corrosion resistance in the environment its free surface is exposed to.

### EXAMPLE 7

As an example of how a tubular product for use in metal dusting conditions is designed to meet the different requirements on such a product a description of a finished tubular product follows.

The tube for use in applications where a corrosive gas stream exchanges heat with the same stream from a different process step across the tube wall consists of a load bearing component of Alloy 800HT (UNS N08811) with a protective layer of a Cu-base alloy of composition Cu-8.5 weight-%Al-1.0 weight-%Si-0.5 weight-%Fe on both inner and outer surfaces. One example of such a tube has a diameter of 60.3mm and a total thickness of 3.91 mm. In this finished product, the outer corrosion resistant layer has a thickness of 1.0mm, and the inner corrosion resistant layer a thickness of 0.7mm, whereas the load bearing component has a thickness of 2.2 mm. At 900°C, this means, that the maximum allowable pressure drop according to the ASME boiler and pressure vessel code, section VIII, division I, is approximately 5.5 bar. Since the gas exchanges heat with itself, the pressure drop across the tube wall is expected to be less than 5 bar, even in processes that operate at absolute pressures in the range 10-100 bar. Thus, the product described in the previous section fulfils the necessary requirements to be used at as high temperatures as 900°C.

It should be clear to the person skilled in the art that the tubular product with the corrosion resistant alloy covering only the inner or only the outer surface are also possible with a wide range of dimensions and compositions of the Cu base alloy and the load bearing alloy.

### EXAMPLE 8

An example of a composite tube merely requiring one corrosion resistant member is a tube which conducts a gas with a carbon activity greater than unity at a temperature range of 450-700°C in its interior and on its outer surface is cooled by air with temperature in the range 200-700°C. For this reason such a tube is covered with a metal dusting resistant Cu-base alloy on its inner surface, but the outer surface must still have a sufficient oxidation resistance with respect to the hot air. Using a proven alloy such as Alloy 600 (UNS N 06600) with 6 mm wall thickness and 2 mm thick Cu-7Al-0.2Si-0.5 weight-%Ni alloy on the inner surface allows at least 10 years service life with an internal pressure of 10 bar.

### EXAMPLE 9

A further example is a tube which conducts steam in its interior and which is heated from the outside by a gas with a carbon activity greater than unity at a temperature range of 200-600°C. In this case, the outer surface is exposed to the metal dusting conditions, whereas the inner surface is not exposed to any carbon related corrosion. For this reason such a tube is covered with a metal dusting resistant Cu-base alloy on its outer surface, and an alloy with sufficient steam corrosion resistance and mechanical strength is used as the load bearing member. One alloy that fulfils these demands is Alloy 800HT (UNS N 08811). With a tube of outer diameter 50 mm and a wall thickness of 3.7 mm, using a 0.9mm thick Cu-5.8 weight-%Al-1.0 weight-%Si layer on the outer tube surface. In that case the Alloy 800HT thickness is 2.8 mm which means that the maximum internal steam pressure that can be allowed is 100 bar.

### EXAMPLE 10

A further example is a tubular product for use in a heat exchanger apparatus in which a gas mixture, e.g. a steam/methane mixture, is partially reformed under endothermic conditions at a temperature between 400 and 900°C inside a catalyst filled tube or inside a catalyst filled annular space between two tubes. The reformation reaction is completed in a separate high temperature reactor by partially oxidising hydrocarbon residues in the gas from the heat exchange reformer into a CO+H₂ mixture inside a separate high temperature reactor. The product gas from such a reactor, with a temperature of 800-1100°C is fed into the shell side of the heat exchanger apparatus, where it exchanges heat with the gas passing over the catalyst, thus providing the necessary heat for the partial reformation.

In such a system, potentially all surfaces, especially those in contact with the high temperature gas coming from the partial oxidation step can experience metal dusting. In addition, in order for the product gas composition to be as required, the catalytic activity of all surfaces must be minimised, including those surfaces in contact with the partially reformed gas.

The heat exchanger tubes according to the invention, for use in such an apparatus, are designed with an outer diameter of between 30 and 350 mm, and a total wall thickness of between 1.5 and 20 mm. The load-carrying alloy is an iron, nickel or cobalt base alloy, such as e.g. Alloy 690, Alloy 601, Alloy 600, Alloy 347, T91. Both inner and outer surfaces are covered with the Cu base alloy according to the invention, in thicknesses of at least 0.5mm.

In addition, sheath tubes conducting the partially oxidised gas stream away from the heat exchanger are likely to suffer metal dusting and tubes according to the invention can be used with an outer diameter of between 40 and 400 mm, and a total wall thickness of between 1.5 and 20 mm. The load-carrying alloy is an iron, nickel or cobalt base alloy, such as e.g. Alloy 690, Alloy 601, Alloy 600, Alloy 347, T91. Both inner and outer surfaces are covered with the Cu base alloy according to the invention, in a thickness on each side of at least 0.5mm.

### EXAMPLE 11

A further example is a tubular product for use in a heat exchanger apparatus in which a gas mixture, e.g. a steam/methane mixture, is partially reformed under endothermic conditions at a temperature between 400 and 900°C inside a catalyst filled tube or inside a catalyst filled annular space between two tubes.

The necessary heat for the reformation reaction can be supplied by partially oxidising a hydrocarbon gas mixture at a high temperature with oxygen either as pure oxygen or as air and/or steam. The resulting gas mixture is fed, at a temperature in the range 800-1100°C into the heat exchanger where it provides the heat for the partial reformation.

Both the partial reformation and partial oxidation reactions produce syngas (H₂+CO) mixtures and different mixing schemes for the two streams exist. For example may the partially reformed gas be fed into the feed to the partial oxidation reactor. Different mixing schemes result in different utilisation of heat of reaction and in different product gas compositions, in terms of ratio between produced CO and H₂ and in terms of amounts of unwanted molecules, e.g. CO₂ and hydrocarbon residues. Depending on the ultimate utilisation of the syngas, different H₂/CO ratios are required.

In such a system, potentially all surfaces, especially those in contact with the high temperature gas coming from the partial oxidation step can experience metal dusting. In addition, in order for the product gas composition to be as required, the catalytic activity of all surfaces must be minimised, including those surfaces in contact with the partially reformed gas.

The heat exchanger tubes according to the invention, for use in such an apparatus, are designed with an outer diameter of between 30 and 400 mm, and a total wall thickness of between 1.5 and 20 mm. The load-carrying alloy is an iron, nickel or cobalt base alloy, such as e.g. Alloy 690, Alloy 601, Alloy 600, Alloy 347, T91. Outer, and optionally, inner surfaces are covered with the Cu base alloy according to the invention, in a thickness on each side of at least 0.5mm.

## Claims

1. A composite tube for use at temperatures above 700°C, said tube consisting of at least one corrosion resistant member and one load-carrying member **characterised in that** the corrosion resistant member is a Cu-Al alloy containing 4-13 weight-% Al and being in a thickness of at least 1 mm, and that the load-carrying member is an alloy based on Fe, Ni or Co, in a thickness of 1-15 mm.

2. A composite tube according to claim 1, **characterized in that** said Cu-Al alloy has an Al content of 6-8 weight-%.

3. A composite tube according to claim 1 or 2, **characterised in that** the corrosion resistant member is located on the inside and/or outside of the load-bearing member.

4. A composite tube according to claim 1 or 2, **characterised in that** the corrosion resistant member is metallurgically bonded to the load-bearing member at least along a part of the contact surface, preferably at least along 60 % of the contact surface.

5. A composite tube according to any of claims 1 and 3, 4 **characterised in that** the composition of the Cu-Al alloy is (all in weight %):
| | |
|---|---|
| Al | 4 - 13 |
| Si | >0 - 6 |
| Fe+Ni+Co+Mn | 0 - 20 |
| REM | 0 - 3 |
balance Cu and normally occurring alloying additions and impurities.

6. A composite tube according to any of the preceding claims **characterised in that** the tube has an outer diameter of 10-400 mm, preferably 35-200 mm.

7. A composite tube according to any of the preceding claims **characterised in that** the tu be has a total wall thickness of 2-20 mm.

8. Method of producing a composite tube according to any of the preceding claims **characterised in that** a load-bearing tube is provided and that the corrosion resistant tube is applied onto the load-bearing tube by overlay welding.

9. Method of inhibiting metal dusting, carburisation and/or coking in environments where the activity of carbon is close to 1 or higher **characterised in that** a composite tube according to any of the preceding claims is used as construction material.

10. Method according to claim 9 **characterised in that** the corrosion resistant member is located closest to the environment where the activity of carbon is close to 1 or higher.

## Patentansprüche

1. Verbundrohr zur Verwendung bei Temperaturen oberhalb von 700°C, wobei das Rohr aus wenigstens einem korrosionsbeständigen Teil und einem lasttragenden Teil besteht, **dadurch gekennzeichnet, daß** das korrosionsbeständige Teil eine Cu-Al-Legierung ist, die 4-13 Gewichts-% Al enthält, und eine Dicke von wenigstens 1 mm hat und daß das lasttragende Teil eine Legierung auf Basis von Fe, Ni oder Co ist und eine Dicke von 1-15 mm hat.

2. Verbundrohr nach Anspruch 1, **dadurch gekennzeichnet, daß** die Cu-Al-Legierung einen Al-Gehalt von 6-8 Gewichts-% hat.

3. Verbundrohr nach Anspruch 1 oder 2, **dadurch gekennzeichnet, daß** das korrosionsbeständige Teil an der Innenseite und/oder der Außenseite des lasttragenden Teils angeordnet ist.

4. Verbundrohr nach Anspruch 1 oder 2, **dadurch gekennzeichnet, daß** das korrosionsbeständige Teil wenigstens entlang eines Teils der Kontaktfläche, bevorzugt entlang wenigstens 60% der Kontaktfläche, metallurgisch mit dem lasttragenden Teil verbunden ist.

5. Verbundrohr nach einem der Ansprüche 1 und 3, 4, **dadurch gekennzeichnet, daß** die Zusammensetzung der Cu-Al-Legierung folgende ist (alle Angaben in Gewichts-%):
| | |
|---|---|
| Al | 7 - 13 |
| Si | >0 - 6 |
| Fe+Ni+Co+Mn | 0 - 20 |
| REM | 0 - 3 |
Rest Cu und normalerweise vorkommende Legierungszusätze und Verunreinigungen.

6. Verbundrohr nach einem der vorangegangenen Ansprüche, **dadurch gekennzeichnet, daß** das Rohr einen Außendurchmesser von 10-400 mm, bevorzugt von 35-200 mm, hat.

7. Verbundrohr nach einem der vorangegangenen Ansprüche, **dadurch gekennzeichnet, daß** das Rohr eine Gesamtwanddicke von 2-20 mm hat.

8. Verfahren zum Herstellen eines Verbundrohrs nach einem der vorangegangenen Ansprüche, **dadurch gekennzeichnet, daß** ein lasttragendes Rohr bereitgestellt wird und daß das korrosionsbeständige Rohr mittels Auftragsschweißen auf das lasttragende Rohr aufgebracht wird.

9. Verfahren zum Hemmen von Metallstaubbildung, Aufkohlung und/oder Verkokung in Umgebungen, in denen die Aktivität von Kohle nahe bei 1 oder darüber liegt, **dadurch gekennzeichnet, daß** ein Verbundrohr nach einem der vorangegangenen Ansprüche als Baumaterial verwendet wird.

10. Verfahren nach Anspruch 9, **dadurch gekennzeichnet, daß** das korrosionsbeständige Teil der Umgebung, in der die Aktivität von Kohle nahe bei 1 oder darüber liegt, am nächsten liegt.

## Revendications

1. Un tube composite pour utilisation à des températures supérieures à 700°C, ledit tube consistant en au moins un élément résistant à la corrosion et un élément supportant la charge, **caractérisé en ce que** l'élément résistant à la corrosion est un alliage Cu-Al contenant 4-13 % en poids d'Al d'une épaisseur d'au moins 1 mm, et **en ce que** l'élément supportant la charge est un alliage à base de Fe, Ni ou Co, d'une épaisseur de 1-15 mm.

2. Un tube composite selon la revendication 1, **caractérisé en ce que** ledit alliage Cu-Al a une teneur en Al de 6-8 % en poids.

3. Un tube composite selon la revendication 1 ou 2, **caractérisé en ce que** l'élément résistant à la corrosion est situé à l'intérieur et/ou à l'extérieur de l'élément supportant la charge.

4. Un tube composite selon la revendication 1 ou 2, **caractérisé en ce que** l'élément résistant à la corrosion est lié de manière métallurgique à l'élément supportant la charge au moins le long d'une portion de la surface de contact, de préférence au moins le long de 60 % de la surface de contact.

5. Un tube composite selon l'une quelconque des revendications 1 et 3, 4, **caractérisé en ce que** la composition de l'alliage Cu-Al est (tout en % en poids) :
| | |
|---|---|
| Al | 4 - 13 |
| Si | >0 - 6 |
| Fe+Ni+Co+Mn | 0 - 20 |
| métaux terres rares | 0 - 3 |
complément en Cu et en impuretés et additions d'alliage apparaissant normalement

6. Un tube composite selon l'une quelconque des revendications précédentes, **caractérisé en ce que** le tube a un diamètre extérieure de 10-400 mm, de préférence 35-200 mm.

7. Un tube composite selon l'une quelconque des revendications précédentes, **caractérisé en ce que** le tube a une épaisseur totale de paroi de 2-20 mm.

8. Procédé de fabrication d'un tube composite selon l'une quelconque des revendications précédentes, **caractérisé en ce qu'**on fournit un tube résistant à la charge et **en ce que** le tube résistant à la corrosion est appliqué sur le tube résistant à la charge par soudage de recouvrement.

9. Procédé d'inhibition de la carburation, de corrosion en atmosphères carburantes et/ou de la cokéfaction dans des environnements où l'activité du carbone est proche de 1 ou supérieure, **caractérisé en ce qu'**un tube composite selon l'une quelconque des revendications précédentes est utilisé comme matériel de construction.

10. Procédé selon la revendication 9, **caractérisé en ce que** l'élément résistant à la corrosion est situé au plus près de l'environnement où l'activité du carbone est proche de 1 ou supérieure.
